# EUROPÄISCHE PATENTANMELDUNG

(11) **EP 0 844 074 A2**
(43) Veröffentlichungstag der Anmeldung: **27.05.1998**
(21) Anmeldenummer: 97890221.1
(22) Anmeldetag: 10.11.1997
(51) Int. Cl.: B32B 15/12

(54) **Metallfolienlaminat, ein Verfahren zu dessen Herstellung sowie dessen Verwendung als Dach- oder Fassadenplatte**

(30) Priorität: 25.11.1996 AT 2049/96
(71) Anmelder: ISOVOLTA Österreichische Isolierstoffwerke Aktiengesellschaft, 2355 Wiener Neudorf (AT)
(72) Erfinder: Hawlik, Hans, 2340 Mödling (AT); Wehrmann, Felix, Dr., 1190 Wien (AT)
(74) Vertreter: Dungler, Karin

(57) **Zusammenfassung**

Es wird ein Metallfolien-Laminat 1 insbesondere zur Verwendung als Fassadenplatte angegeben. Dieses besteht aus dem Laminatkern 3, welcher aus einer Anzahl von mit Kunstharz imprägnierten Papierlagen gebildet wird. Mit diesem Laminatkern 3 sind über die Schichten 5, 5' vorzugsweise zwei Metallfolien wie Kupferfolien 4, 4' verbunden.

## Beschreibung

Die Erfindung betrifft ein Metallfolien-Laminat, ein Verfahren zu dessen Herstellung sowie dessen Verwendung als Dach- oder Fassadenplatte.

An Dach- oder Fassadenplatten werden im Hausbau verschiedenste Anforderungen gestellt. So müssen diese beispielsweise stabil und wetterfest sein, sodaß sie auch nach mehreren Jahren ihr Aussehen beibehalten.

Dabei hat sich insbesondere Kupfer als Materialkomponente bewährt, weil es ein dekorativ hochwertiges und besonders korrosionsbeständiges Metall ist.

Da jedoch Kupfer wie alle Metalle ein guter Wärmeleiter ist und somit Heizwärme aus den Wohnräumen abgibt, mußten zur Einsparung von Energiekosten zusätzliche Maßnahme ergriffen werden.

So ist es bekannt, Kupfer zu Zwecken der Wärmedämmung im Dachausbau mit einer Bitumenschicht zu versehen. Diese Metallverbundplatten sind nun zwar wärmedämmend, weisen jedoch relativ niedrige mechanische Festigkeitswerte auf, da sie relativ dünn sind.

Ferner sind bei der Verlegung dieser relativ dünnen Dachplatten aufwendige Unterdachkonstruktionen notwendig, um dem endgültig gefertigten Dachaufbau die notwendige mechanische Festigkeit zu verleihen.

Ausgehend von diesem bekannten Stand der Technik liegt der Erfindung nunmehr die Aufgabe zugrunde, Dach- oder Fassadenplatten auf Basis von Metallen, insbesondere Kupfer, so zu verbessern, daß die materialspezifischen Vorteile von bekannten Metallplatten, beispielsweise aus Kupfer, beibehalten jedoch deren mechanische Eigenschaften wie Festigkeitswerte verbessert werden.

Erfindungsgemäß wird ein Metallfolien-Laminat vorgeschlagen, das aus einem Kern besteht, welcher aus einer Anzahl von mit Kunstharz imprägnierten Papierlagen gebildet wird und der an zumindestens einer Oberflächenseite mit einer wetterbeständigen Metallfolie verbunden ist.

Die Erfindung ist ferner dadurch gekennzeichnet, daß der Laminatkern beidseitig mit einer wetterbeständigen Metallfolie verbunden ist.

Die wetterbeständigen Metallfolien bestehen vorteilhafterweise aus Weißblech, Kupfer oder Aluminium.

Eine weitere vorteilhafte Variante des Metallfolien-Laminates besteht darin, daß der Laminatkern beidseitig mit einer Kupferfolie verbunden ist.

Der Laminatkern kann erfindungsgemäß ferner an einer Oberflächenseite mit einer Kupferfolie und an der anderen Oberflächenseite mit einer Aluminiumfolie verbunden sein, wobei die Aluminiumfolie an ihrer dem Laminatkern abgewandten Oberflächenseite mit einer Schutzschicht, bestehend aus mit Kunstharz imprägnierten Papieren, verbunden ist.

Die Erfindung betrifft auch ein Verfahren zur Herstellung eines Metallfolien-Laminates, bei welchem
a) zur Herstellung des Laminatkerns mehrere Papierlagen mit Kunstharz imprägniert und anschließend in einer Presse zu einem Preßstapel verschlichtet werden,
b) an diesem gemäß a) gebildeten Preßstapel zumindestens einseitig eine Metallfolie angebracht wird, welche an ihrer dem Preßstapel des Laminatkerns zugewandten Oberflächenseite eine Primerschicht aufweist und bei welchem
c) der gemäß b) gebildete Preßstapel bei Temperaturen von mindestens 130°C und Preßdrücken von mindestens 70 kp/cm² verpreßt wird.

Das Verfahren zur Herstellung des erfindungemäßen Metallfolien-Laminates ist ferner dadurch gekennzeichnet, daß der gemäß Schritt b) gebildete Preßstapel mit einer Aluminiumfolie abgedeckt wird, welche beidseitig mit einer Primerschicht versehen ist, und welche an ihrer dem Preßstapel des Laminatkerns abgewandten Seite eine Schutzschicht aufweist.

Die Erfindung betrifft ferner die Verwendung des vorgenannten Metallfolien-Laminates zur Herstellung von Fassaden- oder Dachplatten.

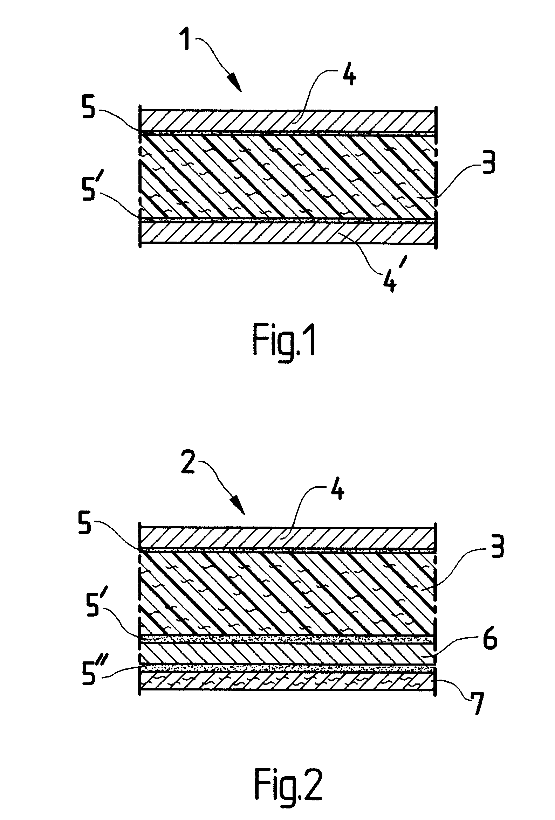

Die Erfindung wird nunmehr anhand der Figuren 1 und 2 sowie anhand eines Ausführungsbeispiels näher erläutert.

Fig. 1 zeigt das erfindungsgemäße Metallfolien-Laminat bei seiner Verwendung als Fassadenplatte. Dabei besteht die Fassadenplatte 1 aus dem Laminatkern 3, welcher beidseitig mit den Kupferfolien 4, 4' über die Schichten 5, 5' verbunden ist.

Fig. 2 zeigt das erfindungsgemäße Metallfolien-Laminat bei dessen Verwendung als Dachplatte. Dabei weist die Dachplatte 2 ebenso einen Laminatkern 3 auf, welcher an einer Oberflächenseite mit der Kupferfolie 4 über die Schicht 5 verbunden ist. An der anderen Oberflächenseite des Kerns 3 hingegen ist dieser mit der Aluminiumfolie 6 über die Schicht 5' verbunden. Die Aluminiumschicht 6 weist an ihrer dem Laminatkern 3 abgewandten Oberflächenseite eine Schicht 5" auf, über welche sie mit der Schutzschicht 7 verbunden ist.

Die Erfindung wird nunmehr anhand eines Ausführungsbeispiels näher erläutert.

Dabei wird gemäß der beispielhaften Variante A ein erfindungsgemäßes Metallfolien-Laminat hergestellt, welches in der Folge als Fassadenplatte 1 verwendet wird. Zu deren Herstellung wird ein Preßstapel, bestehend aus etwa siebzehn mit Phenolharz imprägnierten Papierlagen gebildet, welcher nach Heißverpressung den Laminatkern 3 darstellt. An diesem Stapel werden nunmehr beidseitig die Kupferfolien 4, 4' angeordnet. Diese weisen an ihrer dem Preßstapel des Laminatkerns 3 zugewandten Seite die Schichten 5 bzw. 5' auf. Diese Schichten bestehen aus einer Grundlackierung in Form einer Primerschicht.

Mehrere dieser Preßstapel werden nun in eine stationäre Presse, beispielsweise eine Etagenpresse, eingebracht, wobei die einzelnen Preßstapel einerseits durch Matrizen, welche auch als Strukturgeber dienen und andererseits durch Trennfolien wie Polypropylenfolien voneinander getrennt sind. Nach Ausbildung der Preßstapel wird in der Presse ein Preßdruck von mindestens 70 kp/cm² angelegt. Ferner wird eine Temperatur von etwa 140-150 °C eingestellt. Bei diesem Preßdiagramm erfolgt einerseits die Verklebung der mit Phenolharz imprägnierten Papierlagen untereinander und andererseits die Verklebung der eingesetzten Kupferfolien mit der jeweiligen Oberflächenseite des Laminatkerns. Nach Rückkühlung der Presse auf etwa 40°C kann das erfindungsgemäße Metallfolien-Laminat 1 entnommen werden, welches in der Folge als Fassadenplatte, insbesondere als Balkonplatte eingesetzt wird. Dabei kann jene Kupferfolie, welche besonders der Verwitterung ausgesetzt ist, mit einer gut haftenden, kratzfesten Lackschicht geschützt werden.

Gemäß Verfahrensvariante B wird die Herstellung eines erfindungsgemäßen Metallfolien-Laminates erläutert, welches in der Folge als Dachplatte eingesetzt wird.

Dabei wird analog zu Verfahrensvariante A vorgegangen, wobei anstelle der zweiten Kupferfolie 4' aus Kostengründen eine Aluminiumfolie 6 an den Preßstapel des Laminatkerns 3 angebracht wird. Die Aluminiumfolie 6 ist an ihrer dem Laminatkern 3 abgewandten Seite zusätzlich mit einer Primerschicht 5" versehen. An die Schicht 5" schließt die Schutzschicht 7 an, welche beispielsweise aus zwei mit Kunstharz imprägnierten Papierlagen ausgebildet ist.

Ebenso wie gemäß Verfahrensvariante A werden unter den angegebenen Preßdrücken bzw. Preßtemperaturen die erfindungsgemäßen Metallfolien-Laminate 2 hergestellt, welche als Dachplatten verwendet werden können.

Dabei kann aus optischen Gründen auf die zweite Kupferfolie 4' verzichtet werden, da Aluminium ebenso wie Kupfer als Wasserbarriere gilt und ferner eine Gegenzugsschicht für den Laminatkern 3 darstellt. Durch diese Gegenzugsschicht kann die Deformation des Laminatkerns 3 unterbunden werden.

Da es jedoch bei der Dachverlegung zu Kontaktstellen zwischen den Dachplattenschichten, nämlich zwischen der Kupfer- und der Aluminumschicht, kommt, kann es an diesen Überlappungsstellen zur Ausbildung von galvanischen Elementen kommen, durch welche unerwünschte Ströme fließen. Um dies zu verhindern, wird an der dem Laminatkern abgewandten Seite der Aluminiumfolie 6 mittels der Primerschicht 5" die nicht-metallische Schutzschicht 7 angebracht.

Das gemäß Verfahrensvariante B hergestellte Metallfolien-Laminat mit einer Dicke von beispielsweise 4 mm weist nunmehr folgende mechanische Eigenschaften auf:

| | |
|---|---|
| Biegefestigkeit in Längsrichtung (LR) | 180 MPa |
| Biegefestigkeit in Querrichtung (QR) | 140 MPa |
| Biege-E-Modul (LR) | 12600 MPa |
| Biege-E-Modul (QR) | 10200 MPa |
| Zugfestigkeit (LR) | 150 MPa |
| Zugfestigkeit (QR) | 100 MPa |
| Zug-E-Modul (LR) | 17000 MPa |
| | |
| Zug-E-Modul (QR) | 12000 MPa |
| Kugelfallversuch | 7 mm |
| Schlagbeanspruchung | > 80 N |

Aus den angegebenen Meßwerten ist zu ersehen, daß die mechanischen Meßwerte wie beispielsweise jene hinsichtlich Biege- und Zugfestigkeit durch den Schichtaufbau des Laminatkerns stark beeinflußt werden. Die Meßwerte hinsichtlich Oberflächeneigenschaften hingegen werden maßgeblich durch die Metallfolie beeinflußt (siehe dazu die Meßwerte hinsichtlich Schlagbeanspruchung und Kugelfall).

Um nunmehr die Verwendungskriterien als Dachplatte zu erfüllen, wurden ferner an dem erfindungsgemäßen Metallfolien-Laminat gemäß Verfahrensvariante B Messungen hinsichtlich Feuerbeständigkeit durchgeführt. Dabei konnten die Kriterien hinsichtlich Flugfeuer und strahlende Wärme nach DIN 4107 Teil 7 und ÖNORM B3800 Teil 3 erbracht werden.

Das erfindungsgemäße Metallfolien-Laminat wird nunmehr bei dessen Verwendung als Dachplatte ähnlich wie die bekannten Dachschindeln mit Löchern versehen, durch welche in der Folge eine Verbindung mit einer Lattung einer Unterkonstruktion hergestellt wird.

Bei der Verwendung des erfindungsgemäßen Metallfolien-Laminates als Dachplatte hat es sich gezeigt, daß dieses gegenüber den bekannten Dachplatten eine erhöhte mechanische Festigkeit, bedingt durch den Aufbau des Laminatkerns 3 aufweist.

Ferner ist das erfindungsgemäße Metallfolien-Laminat tritt- und hagel fest, was durch die Messungen hinsichtlich Schlagprüfung und Kugelfall bewiesen werden konnte.

## Patentansprüche

1. Metallfolien-Laminat, bestehend aus einem Kern, welcher aus einer Anzahl von mit Kunstharz imprägnierten Papierlagen gebildet wird und zumindestens einer wetterbeständigen Metallfolie, welche mit einer Oberflächenseite des Laminatkerns verbunden ist.

2. Metallfolien-Laminat nach Anspruch 1, dadurch gekennzeichnet, daß der Laminatkern beidseitig mit einer wetterbeständigen Metallfolie verbunden ist.

3. Metallfolien-Laminat nach Anspruch 1 oder 2, dadurch gekennzeichnet, daß die wetterbeständigen Metallfolien aus Weißblech, Kupfer oder Aluminium bestehen.

4. Metallfolien-Laminat nach einem der Ansprüche 1 bis 3, dadurch gekennzeichnet, daß der Laminatkern beidseitig mit einer Kupferfolie verbunden ist.

5. Metallfolien-Laminat nach einem der Ansprüche 1 bis 3, dadurch gekennzeichnet, daß der Laminatkern an einer Oberflächenseite mit einer Kupferfolie und an der anderen Oberflächenseite mit einer Aluminiumfolie verbunden ist, wobei die Aluminiumfolie an ihrer dem Laminatkern abgewandten Oberflächenseite mit einer Schutzschicht, bestehend aus mit Kunstharz imprägnierten Papieren, verbunden ist.

6. Verfahren zur Herstellung eines Metallfolien-Laminates nach einem der Ansprüche 1 bis 5, dadurch gekennzeichnet, daß
a) zur Herstellung des Laminatkerns mehrere Papierlagen mit Kunstharz imprägniert und anschließend in einer Presse zu einem Preßstapel verschlichtet werden, daß
b) an diesem gemäß a) gebildeten Preßstapel zumindestens einseitig eine Metallfolie angebracht wird, welche an ihrer dem Preßstapel des Laminatkerns zugewandten Oberflächenseite eine Primerschicht aufweist und daß
c) der gemäß b) gebildete Preßstapel bei Temperaturen von mindestens 130°C und Preßdrücken von mindestens 70 kp/cm² verpreßt wird.

7. Verfahren nach Anspruch 6, dadurch gekennzeichnet, daß der gemäß Schritt b) gebildete Preßstapel mit einer Aluminiumfolie abgedeckt wird, welche beidseitig mit einer Primerschicht versehen ist, und die an ihrer dem Preßstapel des Laminatkerns abgewandte Seite eine Schutzschicht aufweist.

8. Verwendung eines Metallfolien-Laminates nach einem der Ansprüche 1 bis 5 zur Herstellung von Fassadenplatten.

9. Verwendung eines Metallfolien-Laminates nach einem der Ansprüche 1 bis 5 zur Herstellung von Dachplatten.
